# EUROPEAN PATENT SPECIFICATION

(11) **EP 2 477 384 B1**
(45) Date of publication and mention of the grant of the patent: **09.10.2019**
(21) Application number: 12150439.3
(22) Date of filing: 09.01.2012
(51) Int. Cl.: H04N 1/00, G06F 3/0481, G06F 3/0484, G06F 3/0488, H04W 4/21

(54) **Image forming system including an image forming apparatus and a terminal device each having a touch panel recognising pinch gestures**
Bilderzeugungssystem mit einer Bilderzeugungsvorrichtung und einer Endgerätvorrichtung jeweils mit einem Berührungsschirm mit Zwickgestenerkennung
Système de formation d'images avec un appareil de formation d'images et un dispositif terminal ayant chacun un panneau tactile avec reconnaisance de gestes de pincement

(30) Priority: 12.01.2011 JP 2011003882
(43) Date of publication of application: 18.07.2012
(73) Proprietor: Konica Minolta Business Technologies, Inc., Chiyoda-ku Tokyo 100-0005 (JP)
(72) Inventor: Sawayanagi, Kazumi, Tokyo, 100-0005 (JP); Iwai, Toshimichi, Tokyo, 100-0005 (JP); Yamaguchi, Takehisa, Tokyo, 100-0005 (JP); Tsuboi, Tomo, Tokyo, 100-0005 (JP); Torigoshi, Akihiro, Tokyo, 100-0005 (JP)
(74) Representative: Hoffmann Eitle

(56) References cited:
- US-A1- 2004 024 824
- US-A1- 2008 165 140
- US-A1- 2008 309 632
- US-A1- 2009 254 855
- US-A1- 2010 073 713
- US-A1- 2010 214 604
- US-A1- 2010 333 044

## Description

### BACKGROUND OF THE INVENTION

### Field of the Invention

The present invention relates to an image forming apparatus and a terminal device, and more particularly to an image forming apparatus and a terminal device in which operations are executed by user's "pinch-in (pinch-close)" and "pinch-out (pinch-open)" gestures on a touch panel.

### Description of the Related Art

In US 2004/0024824 A1, there is described a system and method for bundling information. In particular, there is described a system and method of pushing user-selected data items from a host system to a user's mobile data communication device upon detecting the occurrence of one or more user-defined event triggers. The user may then move the data items to a particular folder within a folder hierarchy stored in the mobile data communication device, or may execute some other system operation on the data item. Software operating at the mobile device and the hot system then synchronizes the folder hierarchy of the mobile device with a folder hierarchy of the host system, and any actions executed on the data items at the mobile device are then automatically replicated on the same data items stored in the host system, thus eliminating the need for the user to manually replicate actions at the host system that have been executed at the mobile data communication device.

In US 2010/0214604 A1, there is described an image processing system, an operation method thereof, an image processing apparatus and an image processing program. A portable terminal apparatus includes a display and a transmitter that transmits display information indicating what is currently displayed on the display to an image processing apparatus over contactless communication. The image processing apparatus includes a receiver that receives the display information from the portable terminal over contactless communication and a memory that records in advance display information samples and specified operations for the image processing apparatus with their connections. Further, the image processing apparatus comprises a controller that determines an appropriate operation based on the display information received by the receiver, the display information samples recorded in a memory and the specified operations also recorded in the memory, and makes the image processing apparatus perform that determined operation.

In US 2008/0309632 A1, there is described a pinch-throw and translation of gestures. The detection of finger pinch, rotate, and tap gestures along with a translation and optionally liftoff motion to initiate certain actions is described. To detect both the gesture and the translation, a certain amount of gesture scaling speed can be detected along with a certain amount of translation speed and distance travelled. For a finger pinch gesture, the scaling speed can be computed as the dot product of the velocity vectors of two or more fingers coming together. For a finger rotation gesture, the scaling speed can be computed as a cross product of the velocity vectors of the rotating fingers. The translation speed of a gesture can be computed as the average of the velocity vectors of any fingers involved in the gesture. The amount of gesture scaling speed and translation speed needed to trigger the recognition of a combined gesture with translation can be a predetermined ratio.

In US 2008/0165140 A1, there is described the detection of gestures on multi-event sensitive devices. To this purpose, there is described a user interface method that includes detecting gestures on or above a multi-event sensor panel and performing an action associated with detected gestures. Such action can include activating or changing a state of one or more graphical user interface objects and emulating functions performed by a mouse or trackball input device.

In US 2010/0333044 A1, there is described a gesture-based interface system and method. It is suggested to manipulate display parameters of displayed images, and optionally to designate the images for manipulation via a gesture pad.

In US 2010/0073713 A1, there is described an apparatus, a method, and a system to transfer a document. The document transfer includes transfer of a document and metadata required to request an additional transfer of the document from a sending device to a receiving device, editing the transferred metadata to request an additional transfer of the document, storing the edited metadata in a receiving device, and additionally transferring the document based on the stored metadata by the sending device.

In US 2009/0254855 A1, there are described communication terminals with superimposed user interfaces. A moving picture representative of a pointing object that is external to the electronic device is superimposed onto the display screen, and a plurality of features of the pointing object are interpreted as selection pointers such that a movement of the pointing object relative to the display screen may be interpreted as movement of a plurality of selection pointers.

Further, some of image forming apparatuses, such as a copier, a printer and their compound machine, MFP (Multi-Functional Peripheral), store image data as a file.

When an image forming apparatus and another device such as a personal digital assistant, for example, are connected to a network, an envisaged use is to transmit and receive a file between these devices through the network.

Conventionally, when transmitting and receiving a file between such an image forming apparatus and another device through a network, operations or manipulations of selecting a file to be transmitted in a device on the transmitting side, and then selecting a destination device on the receiving side referring to the network are necessary. This imposes a complicated manipulation on a user, requires the address of a destination to be identified, and is troublesome.

Moreover, when these devices each have a touch panel as an input device, a conventionally typical operation is to cause options to be displayed on the touch panel in each device and touch one of them that is desired to be indicated. Such an operation is not an intuitive manipulation, which is more complicated for an unfamiliar user.

### SUMMARY OF THE INVENTION

The present invention was made in view of such problems, and has an object to provide an image forming apparatus and a terminal device capable of transmitting and receiving a file with intuitive and easy manipulations between the devices connected through a network.

To achieve the above-described object, according to an aspect of the present invention, an image forming system having the features of claim 1.

Preferably, the first controller performs user authentication using user information to associate the file to be transferred with a user having performed the first gesture, and when a user identified by information included in the request matches the user associated with the file to be transferred, transfers the file to be transferred to the other device.

Preferably, the first controller outputs the file to be transferred to the other device in response to the request sent after the first gesture, thereby transferring the file to be transferred to the terminal device.

Preferably, the first controller previously stores the other device as a destination of the file to be transferred, and outputs the file to be transferred to the terminal device after the request, thereby transferring the file to be transferred to the terminal device.

More preferably, the first controller copies the file to be transferred, outputs the copied file to the terminal device, and deletes the file to be transferred from the memory in response to the request from the terminal device.

Preferably, when the request is not sent within a predetermined period after identification of the file to be transferred, the first controller cancels identification of the file to be transferred.

Preferably, continuously after two contacts are made, when a second gesture of moving the two contacts in a direction that the spacing therebetween is increased and then releasing the two contacts after being moved is detected on display of the first touch panel showing a folder presenting a storage location where the file to be transferred is stored, the first controller cancels identification of the file to be transferred.

Preferably, when the request is not sent within a predetermined period after identification of the file to be transferred, the first controller causes a warning to that effect to be output.

Preferably, the first controller identifies a plurality of files presented by a plurality of icons displayed in the area defined by the two contacts after said first gesture , as files to be transferred.

Preferably, when an icon presenting a folder is displayed in the area defined by the two contacts after said first gesture, the first controller identifies a plurality of files stored in the folder as files to be transferred.

Preferably, when the first gesture is detected, the first controller changes the shape of the icon displayed between the two contacts along with moving the two contacts.

Preferably, continuously after two contacts are made on the first touch panel, when a second gesture of moving the two contacts in a direction that the spacing therebetween is increased and then releasing the two contacts after being moved is detected, the first controller further executes the processes of identifying a storage location displayed in the area defined by the two contacts after said second gesture, as the storage location of a file to be transferred, sending a request to the terminal device to transfer a file, and storing the file transmitted from the terminal device in the storage location.

Preferably, the second controller transmits information that identifies a user previously stored together with the request, to the image forming apparatus.

Preferably, the request includes information indicating that the second gesture has been detected.

Preferably, when the second gesture is detected, the second controller causes an icon presenting the file to be transferred transmitted from the image forming apparatus to be displayed between the two contacts, and changes the shape of the icon displayed along with moving the two contacts.

Preferably, the file to be transferred transmitted from the image forming apparatus has associated therewith information indicating the time of identification of the file to be transferred in the image forming apparatus, and the second controller causes the information at the time of identification of the file to be transferred in the image forming apparatus to be displayed together with the icon.

Preferably, continuously after two contacts are made on the touch panel, when a first gesture of moving the two contacts in a direction that the spacing therebetween is decreased and then releasing the two contacts after being moved is detected, the second controller identifies a file presented by an icon displayed in the area defined by the two contacts after said first gesture, as a file to be transferred, and transfers the file to be transferred to the image forming apparatus in response to a request from the image forming apparatus received by the communication device.

Preferably, the image forming system further includes a server. The first controller of the terminal device transmits the file to be transferred to the server for storage. The second controller of the terminal device requests the server to transfer a file. The first controller of the terminal device outputs the file to be transferred as stored to the terminal device in response to the request.

According to a further aspect of the present invention, there is provided a non-transitory computer-readable storage medium according to the features of claim 19.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows a specific example of a configuration of an image forming system according to an embodiment.
Fig. 2 shows a specific example of a hardware configuration of MFP (Multi-Functional Peripheral) included in the image forming system.
Fig. 3 shows a specific example of a hardware configuration of a portable terminal included in the image forming system.
Fig. 4 shows a specific example of a hardware configuration of a server included in the image forming system.
Figs. 5 and 6 show the outline of operations in the image forming system.
Fig. 7 illustrates a pinch-in gesture.
Fig. 8 illustrates a pinch-out gesture.
Fig. 9 is a block diagram showing a specific example of a functional configuration of MFP.
Fig. 10 is a block diagram showing a specific example of a functional configuration of the portable terminal.
Fig. 11 is a flow chart showing a specific example of an operation in MFP for identifying a file to be transferred.
Fig. 12 is a flow chart showing a specific example of an operation in MFP for outputting the file to be transferred.
Fig. 13 is a flow chart showing a specific example of an operation in the portable terminal for acquiring and storing the file to be transferred.
Fig. 14 shows a specific example of a data configuration of a file request transmitted from the portable terminal to MFP in Step S205 of Fig. 13.
Fig. 15 is a sequence diagram showing the flow of file transfer in the image forming system.
Fig. 16 shows a specific example of changes of an icon along with the pinch-in gesture.
Fig. 17 shows a specific example of changes of an icon along with the pinch-out gesture.
Figs. 18 to 22 each illustrate a specific example of a method of identifying an icon indicated by the pinch-in gesture.

### DESCRIPTION OF THE PREFERRED EMBODIMENTS

Hereinafter, embodiments of the present invention will be described with reference to the drawings. In the following description, like parts and components are denoted by like reference characters. They are named and function identically as well.

### <System Configuration>

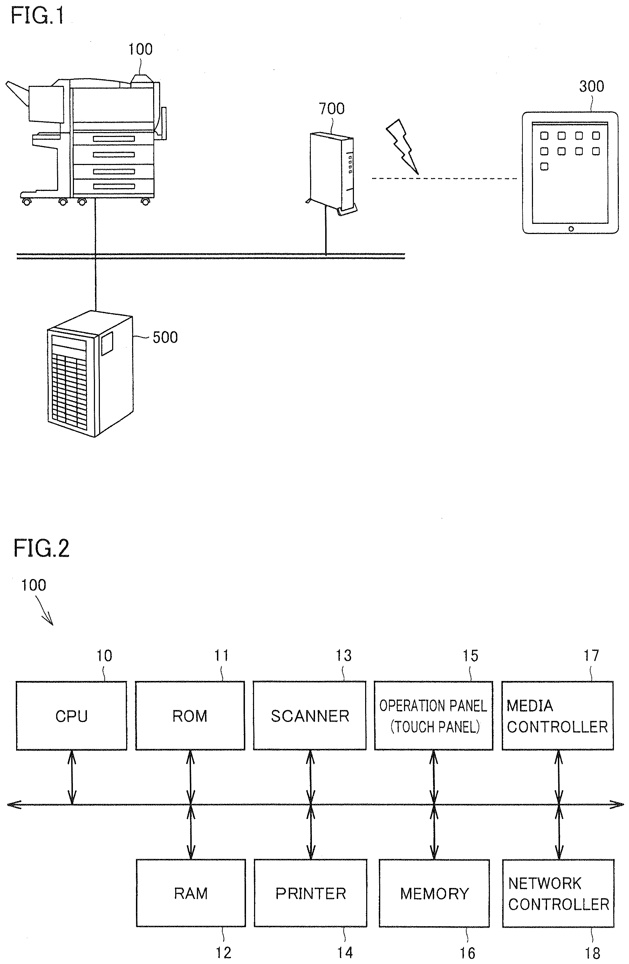

Fig. 1 shows a specific example of a configuration of an image forming system according to the present embodiment.

Referring to Fig. 1, the image forming system according to the present embodiment includes an MFP (Multi-Functional Peripheral) 100 as an example of an image forming apparatus, a portable terminal 300 as a terminal device, and a server 500. They are connected through a network, such as LAN (Local Area Network).

The network may be wired or may be wireless. As an example, as shown in Fig. 1, MFP 100 and server 500 are connected to a wired LAN, the wired LAN further including a wireless LAN access point 700, and portable terminal 300 is connected to wireless LAN access point 700 through the wireless LAN.

### <Configuration of MFP>

Fig. 2 shows a specific example of a hardware configuration of MFP 100.

Referring to Fig. 2, MFP 100 includes a CPU (Central Processing Unit) 10 as an arithmetic device for overall control, a ROM (Read Only Memory) 11 for storing programs and the like to be executed by CPU 10, a RAM (Random Access Memory) 12 for functioning as a working area during execution of a program by CPU 10, a scanner 13 for optically reading a document placed on a document table not shown to obtain image data, a printer 14 for fixing image data on a printing paper, an operation panel 15 including a touch panel for displaying information and receiving an operation input to MFP 100 concerned, a memory 16 for storing image data as a file, a media controller 17 for controlling communications to a recording medium, such as a USB (Universal Serial Bus) memory, for accessing the recording medium to read/write a file therefrom/therein, and a network controller 18 for controlling communications through the above-described network.

Operation panel 15 includes the touch panel and an operation key group not shown. The touch panel is composed of a display device such as a liquid crystal display and a pointing device such as an optical touch panel or a capacitance touch panel, the display device and the pointing device overlapping each other, and displays an operation screen so that an indicated position on the operation screen is identified. CPU 10 causes the touch panel to display the operation screen based on data stored previously for causing screen display.

The indicated position (position of touch) on the touch panel as identified and an operation signal indicating a pressed key are input to CPU 10. CPU 10 identifies details of manipulation based on the pressed key or the operation screen being displayed and the indicated position, and executes a process based thereon.

### <Configuration of Portable Terminal>

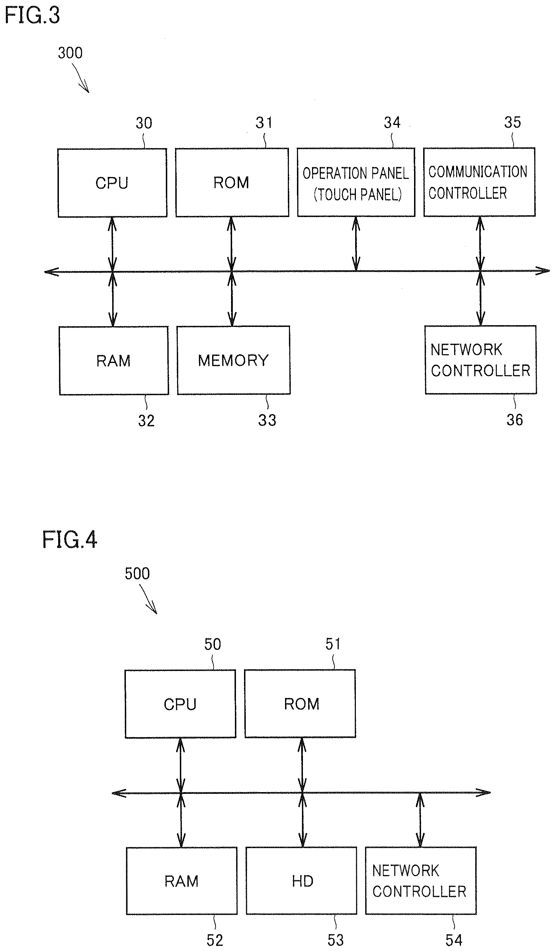

Fig. 3 shows a specific example of a hardware configuration of portable terminal 300.

Referring to Fig. 3, portable terminal 300 includes a CPU 30 as an arithmetic device for overall control, a ROM 31 for storing programs and the like to be executed by CPU 30, a RAM 32 for functioning as a working area during execution of a program by CPU 30, a memory 33 for storing image data as a file or storing another type of information, an operation panel 34 including a touch panel for displaying information and receiving an operation input to portable terminal 300 concerned, a communication controller 35 for controlling communications through telephone lines by communicating with a base station not shown, and a network controller 36 for controlling communications through the above-described network.

Operation panel 34 may have a configuration similar to that of operation panel 15 of MFP 100. That is, as an example, operation panel 34 includes a touch panel composed of a display device such as a liquid crystal display and a pointing device such as an optical touch panel or a capacitance touch panel, the display device and the pointing device overlapping each other.

CPU 30 causes the touch panel to display an operation screen based on data stored previously for causing screen display. On the touch panel, the indicated position on the operation screen is identified, and an operation signal indicating that position is input to CPU 30. CPU 30 identifies details of manipulation based on the operation screen being displayed and the indicated position, and executes a process based thereon.

### <Configuration of Server>

Fig. 4 shows a specific example of a hardware configuration of server 500.

Referring to Fig. 4, server 500 is implemented by a typical computer or the like as described above, and as an example, includes a CPU 50 as an arithmetic device for overall control, a ROM 51 for storing programs and the like to be executed by CPU 50, a RAM 52 for functioning as a working area during execution of a program by CPU 50, a HD (Hard Disk) 53 for storing files and the like, and a network controller 54 for controlling communications through the above-described network.

### <Outline of Operations>

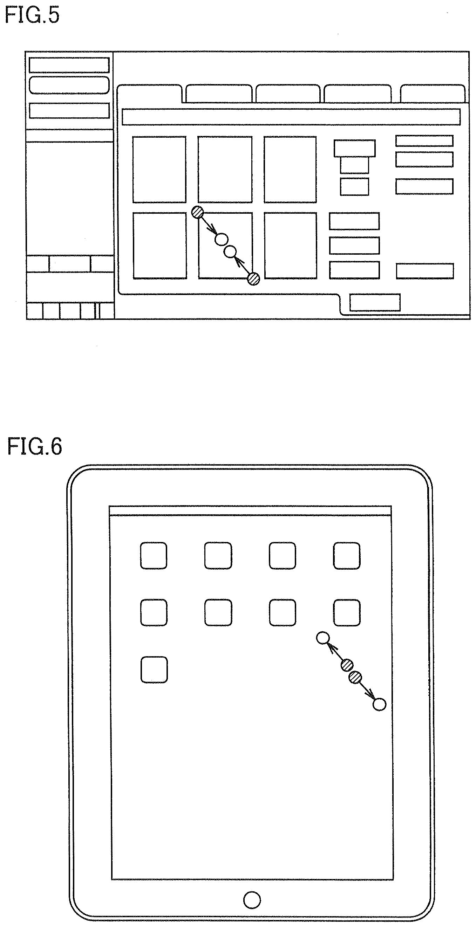

In the image forming system according to the present embodiment, a file is transferred from MFP 100 to portable terminal 300 according to gestures shown in Figs. 5 and 6. As an example, file transfer shall be performed during a gesture on portable terminal 300.

Figs. 5 and 6 show the outline of operations in the image forming system according to the present embodiment. A user logs in to MFP 100, and causes operation panel 15 to display a file list stored in an indicated memory area, such as a memory area associated with himself/herself. Fig. 5 shows an example in which the file list is displayed on operation panel 15. By performing a "pinch-in" gesture as shown in Fig. 5 on an icon indicating a file to be transferred in the file list, that file is identified to be transferred. Then, the user causes operation panel 34 of his/her own portable terminal 300 to display the operation screen. Fig. 6 shows an example in which the operation screen is displayed on operation panel 34. By performing a "pinch-out" gesture thereon as shown in Fig. 6, the file identified to be transferred is transferred from MFP 100 to portable terminal 300.

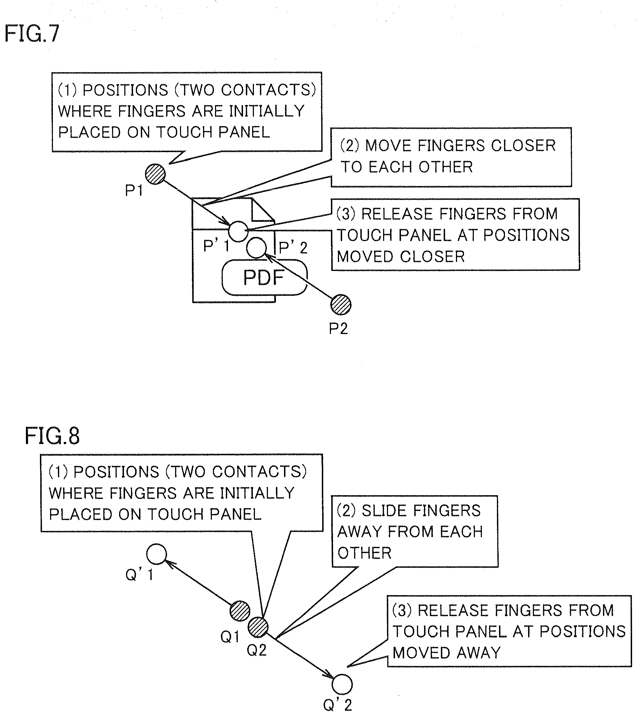

Fig. 7 illustrates a "pinch-in" gesture. Referring to Fig. 7, the "pinch-in" or pinching gesture refers to a motion of making two contacts P1 and P2 on operation panel 15 using, for example, two fingers or the like, and then moving the fingers closer to each other from their initial positions linearly or substantially linearly, and releasing the two fingers from operation panel 15 at two contacts P'1 and P'2 moved closer.

When it is detected that two contacts P1 and P2 on operation panel 15 have been made simultaneously, and further, the respective contacts have been continuously displaced from their initial positions linearly or substantially linearly, and both the contacts have been released almost simultaneously at two contacts P'1 and P'2 positioned at a spacing narrower than the spacing between their initial positions, CPU 10 detects that the "pinch-in" gesture has been performed.

Fig. 8 illustrates a "pinch-out" gesture. Referring to Fig. 8, the "pinch-out" or anti-pinching gesture refers to a motion of making two contacts Q1 and Q2 on operation panel 34 using, for example, two fingers or the like, and then moving the fingers away from their initial positions linearly or substantially linearly, and releasing the two fingers from operation panel 34 at two contacts Q'1 and Q'2 moved away to some degree.

When it is detected that two contacts Q1 and Q2 on operation panel 34 have been made simultaneously, and further, the respective contacts have been continuously displaced from their initial positions linearly or substantially linearly, and both the contacts have been released almost simultaneously at two contacts Q'1 and Q'2 positioned at a spacing wider than the spacing between their initial positions, CPU 30 detects that the "pinch-out" or de-pinching gesture has been performed.

### <Functional Configuration>

The functional configuration of each device for implementing the operations as described in the outline of operations in the image forming system according to the present embodiment will be described.

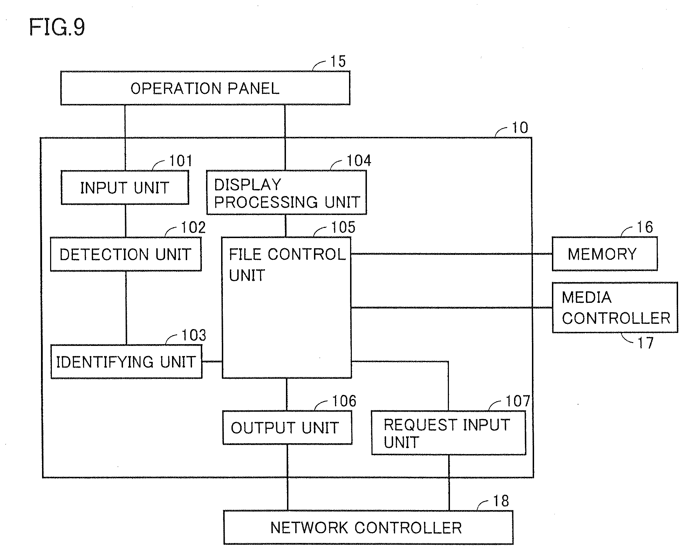

Fig. 9 is a block diagram showing a specific example of a functional configuration of MFP 100. Each function shown in Fig. 9 is a function mainly configured in CPU 10 by CPU 10 reading a program stored in ROM 11 and executing the program on RAM 12. However, at least some functions may be configured by the hardware configuration shown in Fig. 2.

Referring to Fig. 9, as functions for achieving the above-described operations, MFP 100 includes an input unit 101 for receiving input of an operation signal indicating an instruction on operation panel 15, a detection unit 102 for detecting the above-described pinch-in gesture based on the operation signal, an identifying unit 103 for identifying an icon indicated by the pinch-in gesture based on the indicated position presented by the operation signal, a display processing unit 104 for executing a process of achieving display on operation panel 15, a file control unit 105 for executing a process of outputting an identified file among files stored in memory 16 or an external storage medium accessed by media controller 17, an output unit 106 for outputting the identified file to an indicated device through network controller 18, and a request input unit 107 for receiving input of a request for the above-described file from another device through network controller 18.

Identifying unit 103 identifies an icon, displayed in an area defined based on at least either two contacts (two contacts PI, P2 in Fig. 7) indicated initially in the pinch-in gesture or two contacts (two contacts P'1, P'2 in Fig. 7) indicated finally, as an icon indicated by the pinch-in gesture.

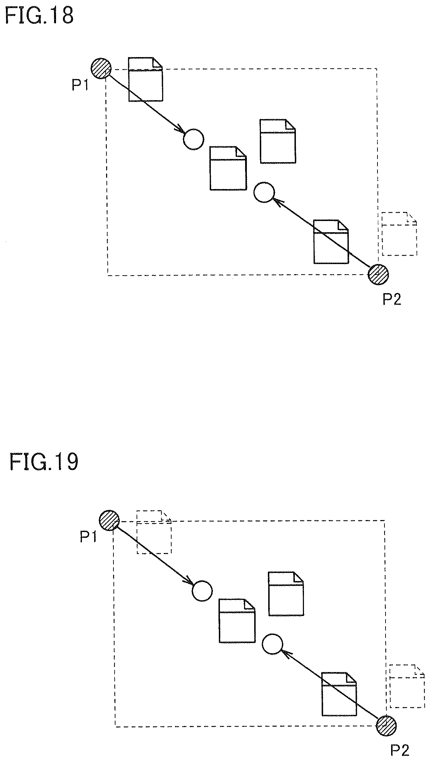

The method of identifying an icon indicated by the pinch-in gesture in identifying unit 103 is not limited to a certain method. Figs. 18 to 22 each illustrate a specific example of a method of identifying an icon indicated by the pinch-in gesture in identifying unit 103.

As an example, as shown in Fig. 18, identifying unit 103 may identify a rectangle in which two contacts P1 and P2 indicated initially are at opposite corners as an area defined by the pinch-in gesture, and may identify icons, each of which is at least partially included in that rectangle, may be identified as indicated icons. Alternatively, as shown in Fig. 19, a rectangle in which two contacts P1 and P2 indicated initially are at opposite corners may be identified as an area defined by the pinch-in gesture, and icons completely included in that rectangle may be identified as indicated icons. With such identification, the user can indicate an intended file by touching operation panel 15 with two fingers so as to sandwich an icon presenting a file to be transferred, and performing a motion for the pinch-in gesture from that state. The file to be transferred can thus be indicated in an intuitive manner. Even when an icon image is small, it can be indicated correctly.

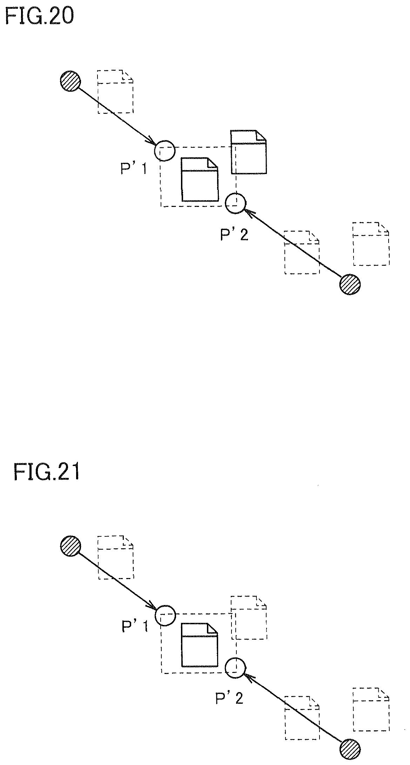

As another example, as shown in Fig. 20, identifying unit 103 may identify a rectangle in which two contacts P'1 and P'2 indicated finally are at opposite corners as an area defined by the pinch-in gesture, and may identify icons, each of which is at least partially included in that rectangle, may be identified as indicated icons. Alternatively, as shown in Fig. 21, a rectangle in which two contacts P'1 and P'2 indicated finally are at opposite corners may be identified as an area defined by the pinch-in gesture, and an icon completely included in that rectangle may be identified as an indicated icon. With such identification, the user can indicate an intended file by touching operation panel 15 with two fingers spaced apart, and then moving them closer to each other so that an icon presenting a file to be transferred is sandwiched finally between the two fingers. The file to be transferred can thus be indicated in an intuitive manner. Even when an icon image is small, it can be indicated correctly.

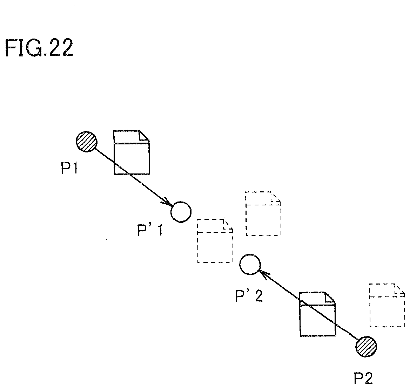

As still another example, as shown in Fig. 22, identifying unit 103 may identify two lines that connect two contacts P1, P2 indicated initially and two contacts P'1, P'2 indicated finally, respectively, as areas defined by the pinch-in gesture, and may identify icons where either one line overlaps as indicated icons. With such identification, the user can indicate an intended file by moving the two fingers so as to pinch in an icon presenting a file to be transferred. The file to be transferred can thus be indicated in an intuitive manner. Even when an icon image is small, it can be indicated correctly.

File control unit 105 temporarily stores the file identified by the pinch-in gesture as a file to be transferred. This "temporary" period is previously set at 24 hours, for example, and when there is no file request, which will be described later, received from another device after the lapse of that period, identification to be transferred may be cancelled. Further, when there is no file request received within the above-described temporary period, CPU 10 may cause operation panel 15 to display a warning reading that file transfer has not been completed, instead of or in addition to cancellation of identification to be transferred, or may transmit a message to that effect to portable terminal 300 stored in correspondence with the user associated with the file to be transferred.

As another example of canceling identification to be transferred, control unit 105 may cancel identification to be transferred by detecting a pinch-in gesture again on a folder in which the icon of the file indicated to be transferred has been displayed, instead of the case when there is no file request received within the above-described temporary period or in addition to the case when there is no file request.

It is to be noted that, although not shown in Fig. 9, MFP 100 further includes the function for previously storing user information, receiving, at input unit 101, input of an operation signal based on a login operation on operation panel 15, and performing user authentication based on that operation signal and user information. File control unit 105 stores the file to be transferred in association with information that identifies the login user. A file request from portable terminal 300 received by request input unit 107 includes information that identifies the user, such as the user name and login information of portable terminal 300 as well as identification information specific to portable terminal 300, as will be described later. File control unit 105 previously stores the login information or the above-described information that identifies the user, and authenticates whether or not the user identified by information included in the file request matches the user associated with the file to be transferred, and when a match occurs, transmits the file to be transferred.

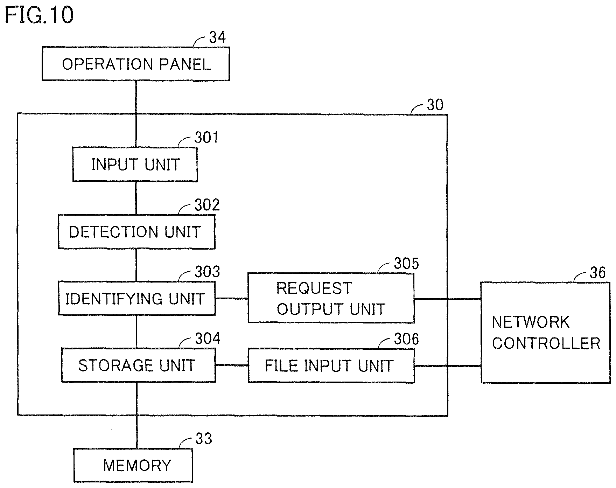

Fig. 10 is a block diagram showing a specific example of a functional configuration of portable terminal 300. Each function shown in Fig. 10 is a function mainly configured in CPU 30 by CPU 30 reading a program stored in ROM 31 and executing the program on RAM 32. However, at least some functions may be configured by the hardware configuration shown in Fig. 3.

Referring to Fig. 10, as functions for achieving the above-described operations, portable terminal 300 includes an input unit 301 for receiving input of an operation signal indicating an instruction on operation panel 34, a detection unit 302 for detecting the above-described pinch-out gesture based on the operation signal, an identifying unit 303 for identifying a position indicated by the pinch-out gesture based on the indicated position presented by the operation signal and identifying a storage location on memory 33 presented by that position, a request output unit 305 for outputting a file request through network controller 36 to an address on the network of MFP 100 previously stored based on the detected pinch-out gesture, a file input unit 306 for receiving a file output from MFP 1 00 in response to the above-described request through network controller 36, and a storage unit 304 for executing a process of storing the input file in the identified storage location.

Identifying unit 303 identifies a folder, displayed in an area defined based on at least either two contacts (two contacts Q1, Q2 in Fig. 8) indicated initially in the pinch-out gesture or two contacts (two contacts Q'1, Q'2 in Fig. 8) indicated finally, as a folder as a storage location indicated by the pinch-out gesture. The method of identifying a storage location indicated by the pinch-out gesture in identifying unit 303 is not limited to a certain method. The method can include an identifying method similar to the identifying method in the pinch-in gesture described with reference to Figs. 18 to 22.

However, when identifying a single storage location by the pinch-out gesture and when a plurality of folders are displayed in a defined area, a folder displayed closest to two indicated contacts (two contacts Q1, Q2 in Fig. 8) may be identified as a storage location, for example. Alternatively, when a plurality of folders are identified as storage locations by the pinch-out gesture by an identifying method similar to that of Figs. 18 to 22, all of them may be identified as storage locations. In this case, storage unit 304 may copy the file to be transferred by the number of the identified storage locations, and may store copied files in the storage locations, respectively.

Request output unit 305 stores the user name and login information of portable terminal 300 concerned as well as identification information specific to portable terminal 300, as information that identifies the user associated previously with portable terminal 300, and outputs a file request together with the information that identifies the user to MFP 100, as will be described later.

### <Flow of Operations in MFP>

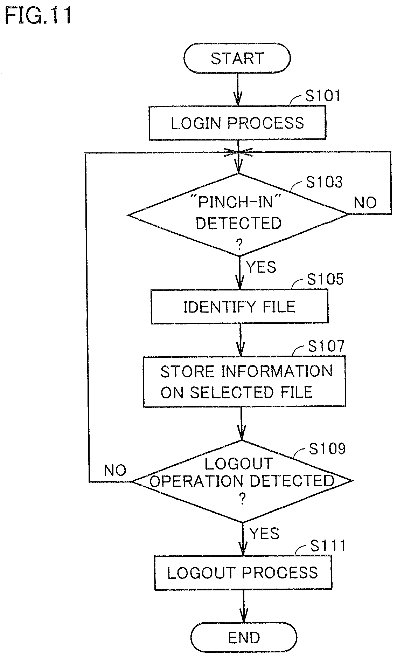

Fig. 11 is a flow chart showing a specific example of operations in MFP 100 for identifying a file to be transferred. The operations shown in the flow chart of Fig. 11 are implemented by CPU 10 reading a program stored in ROM 11 and executing the program on RAM 12.

Referring to Fig. 11, in Step S101, CPU 10 executes a login process by receiving a login operation. Then, when it is detected that the pinch-in gesture has been performed on a file list displayed on operation panel 15 (YES in Step S 103), CPU 10, in Step S105, identifies a file indicated by that gesture, and in Step S107, temporarily stores the identified file in association with identification information of the login user identified by the login process in Step S101.

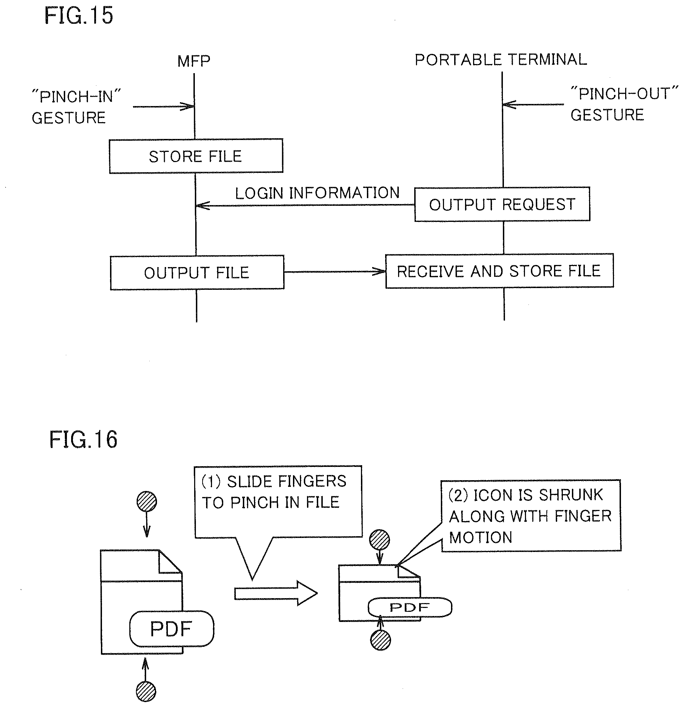

At this time, preferably, CPU 10 changes the shape of the icon displayed between two contacts on operation panel 15 when the start of the above-described pinch-in gesture is detected. Fig. 16 shows a specific example of changes of the icon along with the pinch-in gesture. Referring to Fig. 16, when the start of the pinch-in gesture is detected, CPU 10 causes the icon displayed between the two contacts on operation panel 15 to be changed in shape so as to shrink in the moving direction (sliding direction) of the above-described two contacts. This may be implemented by gradually compressing image data of the icon stored previously in the sliding direction, or may be implemented by previously storing several types of image data and causing the image data to be displayed sequentially.

Thus causing the icon to be displayed, it will be shown in an intuitive manner that a file has been identified as a file to be transferred by the pinch-in gesture.

The above operation is repeated until a logout operation is detected (NO in Step S109). Therefore, a plurality of files may be identified as files to be transferred by the above-described operation performed several times until a logout operation is detected. Alternatively, a plurality of files may be identified as files to be transferred in correspondence with the pinch-in gesture performed on a folder or on a plurality of files.

When a logout operation is detected (YES in Step S109), CPU 10 executes a logout process in Step S111, and terminates the sequential processing of identifying a file to be transferred.

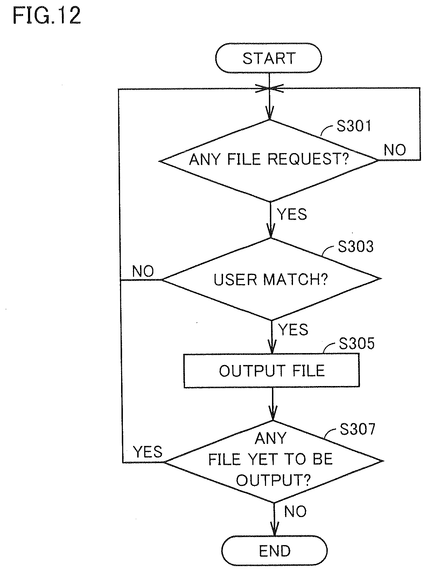

Fig. 12 is a flow chart showing a specific example of an operation in MFP 100 for outputting a file to be transferred. The operation shown in the flow chart of Fig. 12 is also implemented by CPU 10 reading a program stored in ROM 11 and executes the program on RAM 12.

Referring to Fig. 12, upon receipt of a file request from portable terminal 300 (YES in Step S301), CPU 10 authenticates whether or not the user associated with the file temporarily stored as the file to be transferred by the operation shown in Fig. 11 matches a user identified by information included in the request. When a match occurs (YES in Step S303), CPU 10 in Step S305 outputs the file to be transferred as stored temporarily to portable terminal 300 as a requester. When another file to be transferred yet to be output is stored (YES in Step S307), CPU 10 repeats the above process. Accordingly, even when a plurality of files are identified as files to be transferred, they will be transferred to portable terminal 300.

When all the files to be transferred stored in association with the user concerned are output (NO in Step S307), CPU 10 terminates the sequential processing of outputting the files to be transferred.

### <Flow of Operations in Portable Terminal>

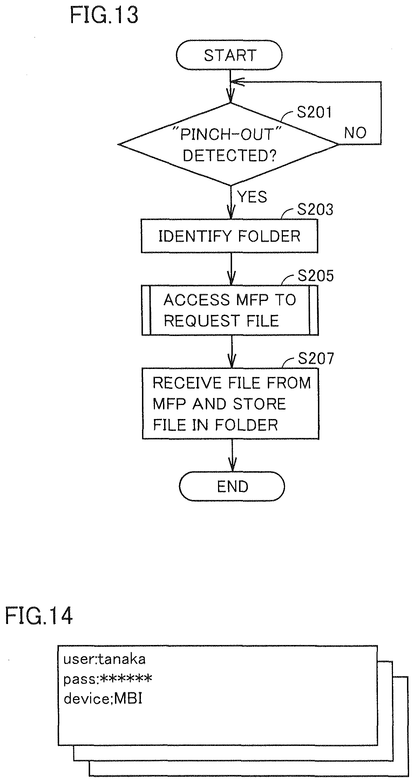

Fig. 13 is a flow chart showing a specific example of operations in portable terminal 300 for acquiring and storing a file to be transferred. The operations shown in the flow chart of Fig. 13 are implemented by CPU 30 reading a program stored in ROM 31 and executes the program on RAM 32.

Referring to Fig. 13, when it is detected that the pinch-out gesture has been performed on the operation screen displayed on operation panel 34 (YES in Step S201), CPU 30 in Step S203 identifies a position on the operation screen where the pinch-out gesture has been performed, thereby identifying a folder to be a storage location of the acquired file.

Then, in Step S205, CPU 30 accesses MFP 100 using the address of MFP 100 on the network stored previously, and requests a file to be transferred. Fig. 14 shows a specific example of a data configuration of a file request transmitted from portable terminal 300 to MFP 100 in Step S205. In Step S205, CPU 30 transmits the user name and a password of portable terminal 300 stored previously as well as identification information specific to portable terminal 300, as an example of information that identifies the user. The information that identifies the user may be at least one of them. The password may be a password included in information on the user's login to MFP 100, or may be different therefrom.

When the file having been identified to be transferred is transmitted from MFP 100 in response to the above-described request, CPU 30, in Step S207, receives the file and stores it in the folder identified in Step S203 described above, and terminates the sequential operation.

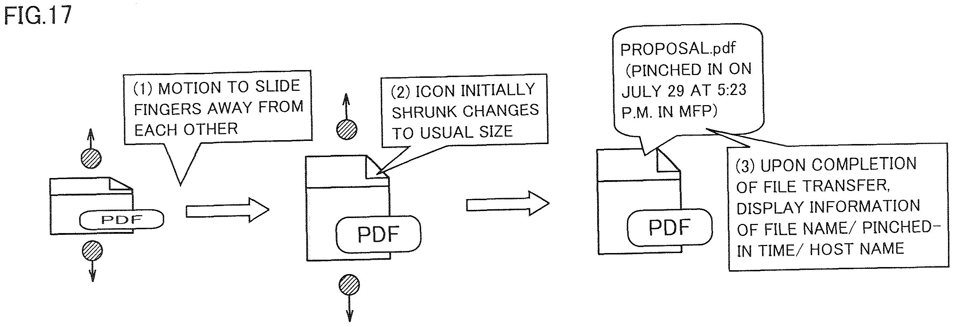

At this time, preferably, when the start of the above-described pinch-out gesture is detected, CPU 30 makes a file request to MFP 100 to acquire a file, and causes an icon presenting that file to be displayed while being changed in shape along with the pinch-out gesture on operation panel 34. Fig. 17 shows a specific example of changes of the icon along with the pinch-out gesture. Referring to Fig. 17, when the start of the above-described pinch-out gesture is detected, CPU 30 acquires a file from MFP 100, and causes an icon presenting that file between two contacts on operation panel 34 to be displayed with its shape shrunk in an opposite direction to subsequent sliding of the two contacts. Then, the icon is changed to expand in the moving direction (sliding direction) of the above-described two contacts. This may be implemented by gradually expanding image data of the icon stored previously in the sliding direction, or may be implemented by previously storing several types of image data and causing the image data to be displayed sequentially.

More preferably, CPU 30 also causes information such as the date and time as well as the user name at the time when that file was identified to be transferred to be displayed together with an icon, as shown in Fig. 17. To implement this, MFP 100 temporarily stores the file to be transferred together with the information that identifies the user and information such as the date and time at the time of identification and the like, and outputs the file to be transferred to portable terminal 300 together with the information.

Thus causing the icon to be displayed, it will be shown in an intuitive manner that the file to be transferred has been acquired by the pinch-out gesture and stored in an identified folder.

### <Effects of Embodiment>

Fig. 15 is a sequence diagram showing the flow of file transfer in the image forming system according to the present embodiment. The operations shown in Fig. 15 are implemented by the above operations being performed in MFP 100 and portable terminal 300.

Referring to Fig. 15, when the user performs the pinch-in gesture on the screen of a file list of MFP 100, a file of concern is identified as a file to be transferred. Then, when the user performs the pinch-out gesture on the operation screen of portable terminal 300, a file request is sent from portable terminal 300 to MFP 100 together with information that can identify the user, such as the user's login information and identification information of portable terminal 300. In MFP 100, when the user is authenticated as the user having indicated the file to be transferred using that information, the identified file to be transferred is output to portable terminal 300. Portable terminal 300, upon receipt of this file, stores the file in the folder identified by the above-described pinch-out gesture.

This allows the user to transfer a file from MFP 100 to portable terminal 300 by intuitive and easy manipulations of pinching a file of concern in MFP 100 as a source and de-pinching the file in a storage location in portable terminal 300 as a destination.

### <Variation 1>

In the above description, when the pinch-in gesture is detected in MFP 100, the file to be transferred shall be identified, and when the pinch-out gesture is detected on portable terminal 300, the file to be transferred shall be transferred from MFP 100 to portable terminal 300.

However, the timing of transfer is not limited to this timing. As another example, the file to be transferred may be identified when the pinch-in gesture is detected in MFP 100, and further, that file may be output to portable terminal 300 previously stored in association with the user having performed that gesture. At this time, preferably, CPU 10 of MFP 100 copies the file to be transferred stored in memory 16 or an inserted external storage device, and outputs a copied file to portable terminal 300.

In this case, CPU 30 of portable terminal 300 receives the file transmitted from MFP 100, and temporarily stores the file in a preset storage location. At this time, preferably, an icon or the like presenting that file is prevented from being displayed until a subsequent pinch-out gesture is detected. When the pinch-out gesture is detected in portable terminal 300, the file temporarily stored is stored in a folder identified by that gesture, and the icon presenting that file is displayed. Further, at this time, CPU 30 outputs a signal indicating that a file request has been sent to MFP 100. CPU 10 of MFP 100 having received this signal deletes the file to be transferred from its own memory 16 or the inserted external storage device.

This "temporary" period is preset at, for example, 24 hours or the like, and when there is no pinch-out gesture detected in portable terminal 300 after the lapse of that period, CPU 30 of portable terminal 300 deletes the file to be transferred having been temporarily stored, and makes a report to that effect to MFP 100. Further, in response to this report, CPU 10 may cause operation panel 15 to display a warning indicating that file transfer has not been completed, or may transmit a message to that effect to portable terminal 300.

### <Variation 2>

In the above example, the file to be transferred shall be output directly from MFP 100 to portable terminal 300. However, as another example, a file may be output through server 500 shown in Fig. 1.

In this case, at least part of the functional configuration of MFP 100 shown in Fig. 9 may be included in server 500. As an example, file control unit 105 and request input unit 107 may be included in server 500.

At this time, MFP 100 outputs a file identified as a file to be transferred to server 500 together with information that identifies a user (login user) having performed that gesture. File control unit 105 included in server 500 temporarily stores the file to be transferred received from MFP 100 together with the information that identifies the user.

Upon detection of the pinch-in gesture, portable terminal 300 accesses server 500 using an address on the network previously stored, and sends a file request together with the above-described information that identifies the user. File control unit 105 included in server 500 authenticates whether or not the user identified by the information included in the file request matches the user associated with the file to be transferred, and when a match occurs, transmits the file to be transferred to portable terminal 300.

It is to be noted that the foregoing describes the process in which a file is transferred from MFP 100 to portable terminal 300, as an example. By exchanging MFP 100 and portable terminal 300 in the above description, a file will be transferred from portable terminal 300 to MFP 100 in a similar manner. Specifically, a file to be transferred is identified by the pinch-in gesture on the file list displayed on operation panel 34 of portable terminal 300, and the file to be transferred is requested by the pinch-out gesture on the operation screen displayed on operation panel 15 of MFP 100, and that file is stored in an identified folder. That is, in this case, a file can also be transferred from portable terminal 300 to MFP 100 by intuitive and easy manipulations.

Further, a program for causing the operations in MFP 100 and the operations in portable terminal 300 described above to be performed can also be offered. Such a program can be recorded on a computer-readable recording medium, such as a flexible disk attached to a computer, a CD-ROM (Compact Disk-Read Only Memory), a ROM, a RAM, a memory card, or the like, and can be offered as a program product. Alternatively, a program can be offered as recorded on a recording medium such as a hard disk built in a computer. Still alternatively, the program can also be offered by downloading through a network.

It is noted that the program according to the present invention may cause the process to be executed by invoking a necessary module among program modules offered as part of an operating system (OS) of a computer with a predetermined timing in a predetermined sequence. In that case, the program itself does not include the above-described module, but the process is executed in cooperation with the OS. Such a program not including a module may also be covered by the program according to the present invention.

Moreover, the program according to the present invention may be offered as incorporated into part of another program. Also in such a case, the program itself does not include the module included in the above-described other program, and the process is executed in cooperation with the other program. Such a program incorporated into another program may also be covered by the program according to the present invention.

An offered program product is installed in a program storage unit, such as a hard disk, and is executed. It is noted that the program product includes a program itself and a recording medium on which the program is recorded.

Although the present invention has been described and illustrated in detail, it is clearly understood that the same is by way of illustration and example only and is not to be taken by way of limitation, the scope of the present invention being interpreted by the terms of the appended claims.

## Claims

1. An image forming system comprising:
an image forming apparatus (100); and
a terminal device (300); wherein
the image forming apparatus (100) has
a first touch panel (15);
a first controller (10) connected to said touch panel;
a memory (16) adapted to store a data file; and
a first communication device (18) adapted to communicate with the terminal device (300); and
the terminal device (300) has
a second touch panel (34);
a second controller (30) connected to said touch panel (34); and
a second communication device (36) adapted to communicate with the image forming apparatus (100),
***characterized in that*** the first controller of the image forming apparatus (100) is adapted to, continuously after two contacts are made on said first touch panel (15), when a first gesture of moving said two contacts in a direction that a spacing therebetween is decreased and then releasing said two contacts after being moved
is detected, identify a file presented by an icon displayed in an area defined by said two contacts after said first gesture, as a file to be transferred, and to transfer said file to be transferred to said terminal device (300) in response to a request to transfer a file from said terminal device (300) received by said first communication device (18); and
continuously after two contacts are made on said second touch panel (34), when a second gesture of moving said two contacts in a direction that a spacing therebetween is increased and then releasing said two contacts after being moved is detected, said second controller (30) of said terminal device (300) is adapted to identify a storage location displayed in an area defined by said two contacts after said second gesture, as the storage location of a file to be transferred, to send a request to said image forming apparatus (100) to transfer a file, and to store said file to be transferred transmitted from said image forming apparatus (100) in said storage location.

2. The image forming system according to claim 1, wherein said first controller (10) of the image forming apparatus (100) is adapted to perform user authentication using user information to associate said file to be transferred with a user having performed said first gesture, and when a user identified by information included in said request matches the user associated with said file to be transferred, to transfer said file to be transferred to said terminal device (300).

3. The image forming system according to claim 1 or 2, wherein said first controller (10) of the image forming apparatus (100) is adapted to output said file to be transferred to said terminal device (300) in response to said request sent after said first gesture, thereby transferring said file to be transferred to said terminal device (300).

4. The image forming system according to claim 1 or 2, wherein said first controller (10) of the image forming apparatus (100) is adapted to previously store said terminal device (300) as a destination of said file to be transferred, and to output said file to be transferred to said terminal device (300) after said request, thereby transferring said file to be transferred to said terminal device (300).

5. The image forming system according to claim 4, wherein said first controller (10) of the image forming apparatus (100) is adapted to copy said file to be transferred, to output the copied file to said terminal device (300), and to delete said file to be transferred from said memory (16) in response to said request from said terminal device (300).

6. The image forming system according to any one of claims 1 to 5, wherein when said request is not sent within a predetermined period after identification of said file to be transferred, said first controller (10) of the image forming apparatus (100) is adapted to cancel identification of said file to be transferred.

7. The image forming system according to any one of claims 1 to 6, wherein continuously after two contacts are made, when a second gesture of moving said two contacts in a direction that the spacing therebetween is increased and then releasing said two contacts after being moved is detected on display of said first touch panel (15) showing a folder presenting a storage location where said file to be transferred is stored, said first controller (10) of the image forming apparatus (100) is adapted to cancel identification of said file to be transferred.

8. The image forming system according to any one of claims 1 to 7, wherein when said request is not sent within a predetermined period after identification of said file to be transferred, said first controller (10) of the image forming apparatus (100) is adapted to cause a warning to that effect to be output.

9. The image forming system according to any one of claims 1 to 8, wherein said first controller (10) of the image forming apparatus (100) is adapted to identify a plurality of files presented by a plurality of icons displayed in the area defined by said two contacts after said first gesture, as files to be transferred.

10. The image forming system according to any one of claims 1 to 9, wherein when an icon presenting a folder is displayed in the area defined by said two contacts after said first gesture, said first controller (10) of the image forming apparatus (100) is adapted to identify a plurality of files stored in said folder as files to be transferred.

11. The image forming system according to any one of claims 1 to 10, wherein when said first gesture is detected, said first controller (10) of the image forming apparatus (100) is adapted to change the shape of the icon displayed between said two contacts along with moving said two contacts.

12. The image forming system according to any one of claims 1 to 11, wherein continuously after two contacts are made on said first touch panel (15), when a second gesture of moving said two contacts in a direction that the spacing therebetween is increased and then releasing said two contacts after being moved is detected, said first controller (10) of the image forming apparatus (100) is adapted to further execute the processes of:
identifying a storage location displayed in an area defined by said two contacts after said second gesture, as the storage location of a file to be transferred;
sending a request to said terminal device (300) to transfer a file; and
storing the file transmitted from said terminal device (300) in said storage location.

13. The image forming system according to claim 1, wherein said second controller (30) of said terminal device (300) is adapted to transmit information that identifies a user previously stored together with said request, to said image forming apparatus (100).

14. The image forming system according to claim 1 or 13, wherein said request includes information indicating that said second gesture has been detected.

15. The image forming system according to any one of claims 1, 13, or 14, wherein when said second gesture is detected, said second controller (30) of said terminal device (300) is adapted to cause an icon presenting said file to be transferred transmitted from said image forming apparatus (100) to be displayed between said two contacts, and to change the shape of the icon displayed along with moving said two contacts.

16. The image forming system according to claim 15, wherein said file to be transferred transmitted from said image forming apparatus (100) has associated therewith information indicating the time of identification of said file to be transferred in said image forming apparatus (100), and
said second controller (30) of said terminal device (300) is adapted to cause the information at the time of identification of said file to be transferred in said image forming apparatus (100) to be displayed together with said icon.

17. The image forming system according to any one of claims 1 and 14 to 16, wherein continuously after two contacts are made on said second touch panel (34), when a first gesture of moving said two contacts in a direction that the spacing therebetween is decreased and then releasing said two contacts after being moved is detected,
said second controller (30) of said terminal device (300) is adapted to identify a file presented by an icon displayed in an area defined by said two contacts after said first gesture, as a file to be transferred, and to transfer said file to be transferred to said image forming apparatus (100) in response to a request from said image forming apparatus (100) received by said second communication device (36).

18. The image forming system according to claim 1, further comprising a server (500), wherein
said first controller (10) of said image forming apparatus (100) is adapted to transmit said file to be transferred to said server (500) for storage,
said second controller (30) of said terminal device (300) is adapted to request said server (500) to transfer a file, and
said first controller (10) of said image forming device (100) is adapted to output said file to be transferred as stored to said terminal device (300) in response to said request.

19. A non-transitory computer-readable storage medium having recorded thereon programs for image forming system having an image processing apparatus (100) having a first touch panel (15) and a first controller (10) connected to said first touch panel (15) and for executing a process of transferring a stored file to a terminal device (300), and a terminal device (300) having a second touch panel (34) and a second controller (30) connected to said second touch panel (34) for executing a process of transferring a file stored in said image processing apparatus (100) to said terminal device (300),
***characterized in that*** one program instructs said first controller (10) of said image forming apparatus (100) to perform the following steps of:
continuously after two contacts are made on said first touch panel (15), detecting (S103) a first gesture of moving said two contacts in a direction that a spacing therebetween is decreased and then releasing said two contacts after being moved;
when said first gesture is detected, identifying (S105) a file presented by an icon displayed in an area defined by said two contacts after said first gesture, as a file to be transferred; and
transferring (S305) said file to be transferred to said terminal device (300) in response to a request to transfer a file from said terminal device (S301) and another program instructs said second controller (30) of the terminal device to perform the following steps of:
continuously after two contacts are made on said second touch panel, detecting (S201) a second gesture of moving said two contacts in a direction that a spacing therebetween is increased and then releasing said two contacts after being moved;
when said second gesture is detected, identifying (S203) a storage location displayed in an area defined by said two contacts after said second gesture, as the storage location of a file to be transferred;
when said second gesture is detected in said detecting step, sending a request (S205) to said image processing apparatus (100) to transfer a file;
receiving said file to be transferred transmitted from said image processing apparatus (100); and
storing (S207) said file to be transferred in said storage location.

## Patentansprüche

1. Bilderzeugendes System, umfassend:
eine bilderzeugende Einrichtung (100); und
eine Endgerätvorrichtung (300); wobei
die bilderzeugende Einrichtung (100) aufweist
ein erstes Touchpanel (15);
eine erste Steuereinrichtung (10), die mit dem Touchpanel verbunden ist;
einen Speicher (16), der ausgelegt ist, eine Datendatei zu speichern; und
eine erste Kommunikationsvorrichtung (18), die ausgelegt ist, mit der Endvorrichtung (300) zu kommunizieren; und
die Endgerätvorrichtung (300) aufweist
ein zweites Touchpanel (34);
eine zweite Steuereinrichtung (30), die mit dem Touchpanel (34) verbunden ist; und
eine zweite Kommunikationsvorrichtung (36), die ausgelegt ist, mit der bilderzeugenden Einrichtung (100) zu kommunizieren,
***dadurch gekennzeichnet, dass*** die erste Steuereinrichtung der bilderzeugenden Einrichtung (100) ausgelegt ist, um, kontinuierlich nach dem Herstellen von zwei Kontakten auf dem ersten Berührungsbildschirm (15), wenn eine erste Geste des Bewegens der zwei Kontakte in eine Richtung, sodass ein Abstand dazwischen verringert wird, und dann des Loslassens der zwei Kontakte nach dem Bewegen erkannt wird, eine Datei, die durch ein Symbol dargestellt wird, das in einem durch die zwei Kontakte definierten Bereich nach der ersten Geste angezeigt wird, als eine zu übertragende Datei zu identifizieren, und die zu übertragende Datei zu der Endgerätvorrichtung (300) in Reaktion auf eine Anforderung, eine Datei von der Endgerätvorrichtung (300) zu übertragen, die von der ersten Kommunikationsvorrichtung (18) empfangen wurde, zu übertragen; und
um kontinuierlich, nachdem zwei Kontakte auf dem zweiten Touchpanel (34) hergestellt wurden, wenn eine zweite Geste des Bewegens der zwei Kontakte in eine Richtung, sodass ein Abstand dazwischen vergrößert wird, und dann des Loslassens der zwei Kontakte nach dem Bewegen erkannt wird, die zweite Steuereinrichtung (30) der Endgerätvorrichtung (300) ausgelegt ist, um einen Speicherort, der in einem Bereich angezeigt wird, der von den zwei Kontakten nach der zweiten Geste definiert ist, einer zu übertragenden Datei zu identifizieren, eine Anforderung an die bilderzeugende Einrichtung (100) zu senden, um eine Datei zu übertragen, und die zu übertragende Datei, die von der bilderzeugenden Einrichtung (100) gesendet wird, an dem Speicherort zu speichern.

2. Bilderzeugendes System nach Anspruch 1, wobei die erste Steuereinrichtung (10) der bilderzeugenden Einrichtung (100) ausgelegt ist, Benutzerauthentifizierung unter Verwendung von Benutzerinformationen durchzuführen, um die zu übertragende Datei einem Benutzer, der die erste Geste durchgeführt hat, zuzuordnen, und wenn ein Benutzer, der durch Informationen, die in der Anforderung beinhaltet sind, identifiziert wurde, mit dem Benutzer, der der zu übertragenden Datei zugeordnet ist, übereinstimmt, die zu übertragende Datei zu der Endgerätvorrichtung (300) zu übertragen.

3. Bilderzeugendes System nach Anspruch 1 oder 2,
wobei die erste Steuereinrichtung (10) der bilderzeugenden Einrichtung (100) ausgelegt ist, die zu übertragende Datei an die Endgerätvorrichtung (300) in Reaktion auf die Anforderung, die nach der ersten Geste gesendet wurde, auszugeben, wodurch die zu übertragende Datei zu der Endgerätvorrichtung (300) übertragen wird.

4. Bilderzeugendes System nach Anspruch 1 oder 2, wobei die erste Steuereinrichtung (10) der bilderzeugenden Einrichtung (100) ausgelegt ist, die Endgerätvorrichtung (300) im Voraus als ein Ziel der zu übertragenden Datei zu speichern, und die zu übertragende Datei an die Endgerätvorrichtung (300) nach der Anforderung auszugeben, wodurch die zu übertragende Datei zu der Endgerätvorrichtung (300) übertragen wird.

5. Bilderzeugendes System nach Anspruch 4, wobei die erste Steuereinrichtung (10) der bilderzeugenden Vorrichtung (100) ausgelegt ist, die zu übertragende Datei zu kopieren, um die kopierte Datei an die Endgerätvorrichtung (300) auszugeben, und die zu übertragende Datei aus dem Speicher (16) in Reaktion auf die Anforderung von der Endgerätvorrichtung (300) zu löschen.

6. Bilderzeugendes System nach einem der Ansprüche 1 bis 5, wobei, wenn die Anforderung nicht innerhalb eines vorbestimmten Zeitraums nach Identifizierung der zu übertragenden Datei gesendet wird, die erste Steuereinrichtung (10) der bilderzeugenden Einrichtung (100) ausgelegt ist, Identifizierung der zu übertragenden Datei aufzuheben.

7. Bilderzeugendes System nach einem der Ansprüche 1 bis 6, wobei kontinuierlich nach dem Herstellen von zwei Kontakten, wenn eine zweite Geste des Bewegens der zwei Kontakte in eine Richtung, sodass der Abstand dazwischen vergrößert wird, und dann des Loslassens der zwei Kontakte nach dem Bewegen auf der Anzeige des ersten Touchpanels (15) erkannt wird, das einen Ordner zeigt, der einen Speicherort darstellt, an dem die zu übertragende Datei gespeichert ist, die erste Steuereinrichtung (10) der bilderzeugenden Einrichtung (100) ausgelegt ist, um die Identifizierung der zu übertragenden Datei aufzuheben.

8. Bilderzeugendes System nach einem der Ansprüche 1 bis 7, wobei, wenn die Anforderung nicht innerhalb eines vorbestimmten Zeitraums nach Identifizierung der zu übertragenden Datei gesendet wird, die erste Steuereinrichtung (10) der bilderzeugenden Einrichtung (100) ausgelegt ist, zu veranlassen, dass eine Warnung in Bezug hierauf ausgegeben wird.

9. Bilderzeugendes System nach einem der Ansprüche 1 bis 8, wobei die erste Steuereinrichtung (10) der bilderzeugenden Einrichtung (100) ausgelegt ist, eine Vielzahl von Dateien, die von einer Vielzahl von Symbolen dargestellt werden, die in dem Bereich angezeigt werden, der von den zwei Kontakten nach der ersten Geste definiert ist, als zu übertragende Dateien zu identifizieren.

10. Bilderzeugendes System nach einem der Ansprüche 1 bis 9, wobei, wenn ein Symbol, das einen Ordner dargestellt, in dem Bereich angezeigt wird, der von den zwei Kontakten nach der ersten Geste definiert ist, die erste Steuereinrichtung (10) der bilderzeugenden Einrichtung (100) ausgelegt ist, eine Vielzahl von Dateien zu identifizieren, die in dem Ordner als zu übertragende Dateien gespeichert sind.

11. Bilderzeugendes System nach einem der Ansprüche 1 bis 10, wobei, wenn die erste Geste erkannt wird, die erste Steuereinrichtung (10) der bilderzeugenden Einrichtung (100) ausgelegt ist, die Form des Symbols, das zwischen zwei Kontakten angezeigt wird, zusammen mit Bewegen der zwei Kontakte zu verändern.

12. Bilderzeugendes System nach einem der Ansprüche 1 bis 11, wobei kontinuierlich nach dem Herstellen von zwei Kontakten auf dem ersten Touchpanel (15), wenn eine zweite Geste des Bewegens der zwei Kontakte in eine Richtung, sodass der Abstand dazwischen vergrößert wird, und dann des Loslassens der zwei Kontakte nach dem Bewegen erkannt wird, die erste Steuereinrichtung (10) der bilderzeugenden Vorrichtung (100) ausgelegt ist, um weiter die folgenden Prozesse auszuführen:
Identifizieren eines Speicherorts, der in einem Bereich angezeigt wird, der von den zwei Kontakten nach der zweiten Geste definiert ist, als den Speicherort einer zu übertragenden Datei;
Senden einer Anforderung an die Endgerätvorrichtung (300), eine Datei zu übertragen; und
Speichern der Datei, die von der Endgerätvorrichtung (300) in den Speicherort gesendet wurde.

13. Bilderzeugendes System nach Anspruch 1, wobei die zweite Steuereinrichtung (30) der Endgerätvorrichtung (300) ausgelegt ist, Informationen an die bilderzeugende Einrichtung (100) zu senden, die einen Benutzer identifizieren, der zuvor zusammen mit der Anforderung gespeichert wurde.

14. Bilderzeugendes System nach Anspruch 1 oder 13, wobei die Anforderung Informationen beinhaltet, die angeben, dass die zweite Geste erkannt wurde.

15. Bilderzeugendes System nach einem der Ansprüche 1, 13 oder 14, wobei, wenn die zweite Geste erkannt wird, die zweite Steuereinrichtung (30) der Endgerätvorrichtung (300) ausgelegt ist zu veranlassen, dass ein Symbol, das eine zu übertragende Datei dargestellt, die von der bilderzeugenden Einrichtung (100) gesendet wird, zwischen zwei Kontakten angezeigt wird, und die Form des angezeigten Symbols zusammen mit Bewegen der zwei Kontakte zu verändern.

16. Bilderzeugendes System nach Anspruch 15, wobei der zu übertragenden Datei, die von der bilderzeugenden Vorrichtung (100) gesendet wird, Informationen zugeordnet sind, die die Zeit der Identifizierung der zu übertragenden Datei in der bilderzeugenden Vorrichtung (100) angeben, und
wobei die zweite Steuereinrichtung (30) der Endgerätvorrichtung (300) ausgelegt ist zu veranlassen, dass die Informationen zum Zeitpunkt der Identifizierung der zu übertragenden Datei in der bilderzeugenden Einrichtung (100) zusammen mit dem Symbol angezeigt werden.

17. Bilderzeugendes System nach einem der Ansprüche 1 und 14 bis 16, wobei kontinuierlich, nachdem zwei Kontakte auf dem zweiten Touchpanel (34) hergestellt wurden, wenn eine erste Geste des Bewegens der zwei Kontakte in eine Richtung, sodass der Abstand dazwischen verringert wird, und dann des Loslassens der zwei Kontakte nach dem Bewegen erkannt wird,
die zweite Steuereinrichtung (30) der Endgerätvorrichtung (300) ausgelegt ist, eine Datei, die von einem Symbol dargestellt wird, das in einem Bereich angezeigt wird, der durch die zwei Kontakte nach der ersten Geste definiert ist, als eine zu übertragende Datei zu identifizieren, und die zu übertragende Datei zu der bilderzeugenden Einrichtung (100) in Reaktion auf eine Anforderung von der bilderzeugenden Einrichtung (100), die von der zweiten Kommunikationsvorrichtung (36) empfangen wurde, zu übertragen.

18. Bilderzeugendes System nach Anspruch 1, weiter einen Server (500) umfassend, wobei
die erste Steuereinrichtung (10) der bilderzeugenden Einrichtung (100) ausgelegt ist, die zu übertragende Datei an den Server (500) zur Speicherung zu senden,
wobei die zweite Steuereinrichtung (30) der Endgerätvorrichtung (300) ausgelegt ist, den Server (500) aufzufordern, eine Datei zu übertragen, und
die erste Steuereinrichtung (10) der bilderzeugenden Vorrichtung (100) ausgelegt ist, die zu übertragende Datei, wie in der Endgerätvorrichtung (300) gespeichert, in Reaktion auf die Anforderung auszugeben.

19. Nicht-transitorisches, computerlesbares Speichermedium mit darauf aufgezeichneten Programmen für ein bilderzeugendes System mit einer Bildverarbeitungseinrichtung (100) mit einem ersten Touchpanel (15) und einer ersten Steuereinrichtung (10), die mit dem ersten Touchpanel (15) verbunden ist, und für Ausführen eines Prozesses des Übertragens einer gespeicherten Datei zu einer Endgerätvorrichtung (300), und eine Endgerätvorrichtung (300) mit einem zweiten Touchpanel (34) und einer zweiten Steuereinrichtung (30), die mit dem zweiten Touchpanel (34) verbunden ist, zum Ausführen eines Prozesses des Übertragens einer Datei, die in der Bildverarbeitungsvorrichtung (100) gespeichert ist, zu der Endgerätvorrichtung (300),
***dadurch gekennzeichnet, dass***
ein Programm die erste Steuereinrichtung (10) der bilderzeugenden Einrichtung (100) anweist, die folgenden Schritte durchzuführen:
kontinuierlich nachdem zwei Kontakte auf dem zweiten Touchpanel (15) hergestellt wurden, Erkennen (S103) einer ersten Geste des Bewegens der zwei Kontakte in eine Richtung, sodass ein Abstand dazwischen verringert wird, und dann Loslassen der zwei Kontakte nach dem Bewegen;
wenn die erste Geste erkannt wird, Identifizieren (S105) einer Datei, die von einem Symbol dargestellt wird, das in einem Bereich angezeigt wird, der von den zwei Kontakten nach der ersten Geste definiert ist, als eine zu übertragende Datei; und
Übertragen (S305) der zu übertragenden Datei an die Endgerätvorrichtung (300) in Reaktion auf eine Anforderung, eine Datei von der Endgerätvorrichtung (S301) zu übertragen, und
wobei ein anderes Programm die zweite Steuereinrichtung (30) der Endgerätvorrichtung anweist, die folgenden Schritte durchzuführen:
kontinuierlich nachdem zwei Kontakte auf dem zweiten Touchpanel hergestellt wurden, Erkennen (S201) einer zweiten Geste des Bewegens der zwei Kontakte in eine Richtung, sodass ein Abstand dazwischen vergrößert wird, und dann Loslassen der zwei Kontakte nach dem Bewegen;
wenn die zweite Geste erkannt wird, Identifizieren (S203) eines Speicherorts, der in einem Bereich angezeigt wird, der von zwei Kontakten nach der zweiten Geste definiert ist, als den Speicherort einer zu übertragenden Datei;
wenn die zweite Geste in dem Erkennungsschritt erkannt wird, Senden einer Anforderung (S205) an die Bildverarbeitungseinrichtung (100), eine Datei zu übertragen;
Empfangen der zu übertragenden Datei, die von der Bildverarbeitungseinrichtung (100) gesendet wurde; und
Speichern (S207) der zu übertragenen Datei in dem Speicherort.

## Revendications

1. Système de formation d'image comprenant :
un appareil de formation d'image (100) ; et
un dispositif terminal (300) ; dans lequel
l'appareil de formation d'image (100) comporte
un premier panneau tactile (15) ;
une première unité de commande (10) reliée audit panneau tactile ;
une mémoire (16) conçue pour stocker un fichier de données ; et
un premier dispositif de communication (18) conçu pour communiquer avec le dispositif terminal (300) ; et
le dispositif terminal (300) a
un second panneau tactile (34) ;
une seconde unité de commande (30) reliée audit panneau tactile (34) ; et
un second dispositif de communication (36) conçu pour communiquer avec l'appareil de formation d'image (100),
**caractérisé en ce que** la première unité de commande de l'appareil de formation d'image (100) est conçue pour, continuellement après que deux contacts sont faits sur ledit premier panneau tactile (15), quand un premier geste de déplacement desdits deux contacts dans une direction **en ce qu'**un espacement entre ces derniers est diminué et en libérant ensuite lesdits deux contacts après déplacement est détecté, identifier un fichier présenté par une icône affichée dans une zone définie par lesdits deux contacts après ledit premier geste, en tant que fichier à transférer, et pour transférer ledit fichier à transférer vers ledit dispositif terminal (300) en réponse à une demande pour transférer un fichier depuis ledit dispositif terminal (300) reçu par ledit premier dispositif de communication (18) ; et
continuellement après que deux contacts sont faits sur ledit second panneau tactile (34), quand un second geste de déplacement desdits deux contacts dans une direction **en ce qu'**un espacement entre ces derniers est augmenté et en libérant ensuite lesdits deux contacts après déplacement est détecté, ladite seconde unité de commande (30) dudit dispositif terminal (300) est conçue pour identifier un emplacement de stockage affiché dans une zone définie par lesdits deux contacts après ledit second geste, en tant qu'emplacement de stockage d'un fichier à transférer, pour envoyer une demande audit appareil de formation d'image (100) pour transférer un fichier, et pour stocker ledit fichier à transférer transmise en provenance dudit appareil de formation d'image (100) dans ledit emplacement de stockage.

2. Système de formation d'image selon la revendication 1, dans lequel ladite première unité de commande (10) de l'appareil de formation d'image (100) est conçue pour effectuer une authentification d'utilisateur en utilisant des informations d'utilisateur pour associer ledit fichier à transférer à un utilisateur ayant effectué ledit premier geste, et quand un utilisateur identifié par des informations incluses dans ladite demande correspond à l'utilisateur associé audit fichier à transférer, pour transférer ledit fichier à transférer vers ledit dispositif terminal (300).

3. Système de formation d'image selon la revendication 1 ou 2, dans lequel ladite première unité de commande (10) de l'appareil de formation d'image (100) est conçue pour sortir ledit fichier à transférer vers ledit dispositif terminal (300) en réponse à ladite demande envoyée après ledit premier geste, transférant de ce fait ledit fichier à transférer vers ledit dispositif terminal (300).

4. Système de formation d'image selon la revendication 1 ou 2, dans lequel ladite première unité de commande (10) de l'appareil de formation d'image (100) est conçue pour stocker à l'avance ledit dispositif terminal (300) en tant que destination dudit fichier à transférer, et pour sortir ledit fichier à transférer vers ledit dispositif terminal (300) après ladite demande, transférant de ce fait ledit fichier à transférer vers ledit dispositif terminal (300).

5. Système de formation d'image selon la revendication 4, dans lequel ladite première unité de commande (10) de l'appareil de formation d'image (100) est conçue pour copier ledit fichier à transférer, pour sortir le fichier copié vers ledit dispositif terminal (300), et pour supprimer ledit fichier à transférer depuis ladite mémoire (16) en réponse à ladite demande provenant dudit dispositif terminal (300).

6. Système de formation d'image selon l'une quelconque des revendications 1 à 5, dans lequel lorsque ladite demande n'est pas envoyée dans les limites d'une période prédéterminée après identification dudit fichier à transférer, ladite première unité de commande (10) de l'appareil de formation d'image (100) est conçue pour annuler l'identification dudit fichier à transférer.

7. Système de formation d'image selon l'une quelconque des revendications 1 à 6, dans lequel continuellement après que deux contacts sont faits, quand un second geste de déplacement desdits deux contacts dans une direction en ce que l'espacement entre ces derniers est augmenté et en libérant ensuite lesdits deux contacts après déplacement est détecté sur l'afficheur dudit premier panneau tactile (15) montrant un dossier présentant un emplacement de stockage où ledit fichier à transférer est stocké, ladite première unité de commande (10) de l'appareil de formation d'image (100) est conçue pour annuler l'identification dudit fichier à transférer.

8. Système de formation d'image selon l'une quelconque des revendications 1 à 7, dans lequel lorsque ladite demande n'est pas envoyée dans les limites d'une période prédéterminée après l'identification dudit fichier à transférer, ladite première unité de commande (10) de l'appareil de formation d'image (100) est conçue pour provoquer la sortie d'un avertissement à cet effet.

9. Système de formation d'image selon l'une quelconque des revendications 1 à 8, dans lequel la première unité de commande (10) de l'appareil de formation d'image (100) est conçue pour identifier une pluralité de fichiers présentés par une pluralité d'icônes affichées dans la zone définie par lesdits deux contacts après ledit premier geste, en tant que fichiers à transférer.

10. Système de formation d'image selon l'une quelconque des revendications 1 à 9, dans lequel lorsqu'une icône présentant un dossier est affichée dans la zone définie par lesdits deux contacts après ledit premier geste, ladite première unité de commande (10) de l'appareil de formation d'image (100) est conçue pour identifier une pluralité de fichiers stockés dans ledit dossier en tant que fichiers à transférer.

11. Système de formation d'image selon l'une quelconque des revendications 1 à 10, dans lequel lorsque ledit premier geste est détecté, ladite première unité de commande (10) de l'appareil de formation d'image (100) est conçue pour changer la forme de l'icône affichée entre lesdits deux contacts en même temps que le déplacement desdits deux contacts.

12. Système de formation d'image selon l'une quelconque des revendications 1 à 11, dans lequel continuellement après que deux contacts sont faits sur ledit premier panneau tactile (15), quand un second geste de déplacement desdits deux contacts dans une direction en ce que l'espacement entre ces derniers est augmenté et en libérant ensuite lesdits deux contacts après déplacement est détecté, ladite première unité de commande (10) de l'appareil de formation d'image (100) est conçue pour exécuter en outre les processus de :
identification d'un emplacement de stockage affiché dans une zone définie par lesdits deux contacts après ledit second geste, en tant qu'emplacement de stockage d'un fichier à transférer ;
envoi d'une demande audit dispositif terminal (300) pour transférer un fichier ; et
stockage du fichier transmis en provenance dudit dispositif terminal (300) dans ledit emplacement de stockage.

13. Système de formation d'image selon la revendication 1, dans lequel ladite seconde unité de commande (30) dudit dispositif terminal (300) est conçue pour transmettre des informations qui identifient un utilisateur précédemment stockées en même temps que ladite demande, audit appareil de formation d'image (100).

14. Système de formation d'image selon la revendication 1 ou 13, dans lequel ladite demande inclut des informations indiquant que ledit second geste a été détecté.

15. Système de formation d'image selon l'une quelconque des revendications 1, 13, ou 14, dans lequel lorsque ledit second geste est détecté, ladite seconde unité de commande (30) dudit dispositif terminal (300) est conçue pour amener une icône présentant ledit fichier à transférer transmis en provenance dudit appareil de formation d'image (100) à être affichée entre lesdits deux contacts et pour changer la forme de l'icône affichée en même temps que le déplacement desdits deux contacts.

16. Système de formation d'image selon la revendication 15, dans lequel ledit fichier à transférer transmis en provenance dudit appareil de formation d'image (100) a associé à celui-ci des informations indiquant le temps d'identification dudit fichier à transférer dans l'appareil de formation d'image (100), et
ladite seconde unité de commande (30) dudit dispositif terminal (300) est conçue pour amener les informations au moment de l'identification dudit fichier à être transférées dans ledit appareil de formation d'image (100) pour être affichées en même temps que ladite icône.

17. Système de formation d'image selon l'une quelconque des revendications 1 et 14 à 16, dans lequel continuellement après que deux contacts sont faits sur ledit second panneau tactile (34), quand un premier geste de déplacement desdits deux contacts dans une direction en ce que l'espacement entre ces derniers est diminué et en libérant ensuite lesdits deux contacts après déplacement est détecté,
ladite seconde unité de commande (30) dudit dispositif terminal (300) est conçue pour identifier un fichier présenté par une icône affichée dans une zone définie par lesdits deux contacts après ledit premier geste, en tant que fichier à transférer, et pour transférer ledit fichier à transférer vers ledit appareil de formation d'image (100) en réponse à une demande en provenance dudit appareil de formation d'image (100) reçue par ledit second dispositif de communication (36).

18. Système de formation d'image selon la revendication 1, comprenant en outre un serveur (500), dans lequel
ladite première unité de commande (10) dudit appareil de formation d'image (100) est conçue pour transmettre ledit fichier à transférer audit serveur (500) pour stockage,
ladite seconde unité de commande (30) dudit dispositif terminal (300) est conçue pour demander audit serveur (500) de transférer un fichier, et
ladite première unité de commande (10) dudit dispositif de formation d'image (100) est conçue pour sortir ledit fichier à transférer tel que stocké vers ledit dispositif terminal (300) en réponse à ladite demande.

19. Support de stockage non transitoire lisible par ordinateur ayant enregistré sur ce dernier des programmes pour système de formation d'image ayant un appareil de traitement d'image (100) ayant un premier panneau tactile (15) et une première unité de commande (10) reliée audit premier panneau tactile (15) et pour exécuter un processus consistant à transférer un fichier stocké vers un dispositif terminal (300), et un dispositif terminal (300) ayant un second panneau tactile (34) et une seconde unité de commande (30) reliée audit second panneau tactile (34) pour exécuter un processus consistant à transférer un fichier stocké dans ledit appareil de traitement d'image (100) vers ledit dispositif terminal (300),
**caractérisé en ce que**
un programme particulier ordonne à ladite première unité de commande (10) dudit appareil de formation d'image (100) d'effectuer les étapes suivantes consistant à :
continuellement après que deux contacts sont faits sur ledit premier panneau tactile (15), détecter (S103) un premier geste de déplacement desdits deux contacts dans une direction **en ce qu'**un espacement entre ces derniers est diminué et en libérant ensuite lesdits deux contacts après déplacement ;
lorsque ledit premier geste est détecté, identifier (S105) un fichier présenté par une icône affichée dans une zone définie par lesdits deux contacts après ledit premier geste, en tant que fichier à transférer ; et
transférer (S305) ledit fichier à transférer audit dispositif terminal (300) en réponse à une demande pour transférer un fichier à partir dudit dispositif terminal (S301), et
un autre programme ordonne à ladite seconde unité de commande (30) du dispositif terminal d'effectuer les étapes suivantes consistant à :
continuellement après que deux contacts sont faits sur ledit second panneau tactile, détecter (S201) un second geste de déplacement desdits deux contacts dans une direction **en ce qu'**un espacement entre ces derniers est augmenté et en libérant ensuite lesdits deux contacts après déplacement ;
lorsque ledit second geste est détecté, identifier (S203) un emplacement de stockage affiché dans une zone définie par lesdits deux contacts après ledit second geste, en tant qu'emplacement de stockage d'un fichier à transférer ;
lorsque ledit second geste est détecté dans ladite étape de détection, envoyer une demande (S205) audit appareil de traitement d'image (100) pour transférer un fichier ;
recevoir ledit fichier à transférer transmis en provenance dudit appareil de traitement d'image (100) ; et
stocker (S207) ledit fichier à transférer dans ledit emplacement de stockage.
